(19) Europäisches Patentamt
European Patent Office
Office européen des brevets

(11) EP 0 667 555 B1

(12) **EUROPEAN PATENT SPECIFICATION**

(45) Date of publication and mention of the grant of the patent:
**28.08.2002 Bulletin 2002/35**

(51) Int Cl.$^7$: **G02F 1/1343**

(21) Application number: **95200479.4**

(22) Date of filing: **13.02.1995**

(54) **Active matrix type liquid crystal display apparatus**

Flüssigkristall-Anzeigevorrichtung mit aktiver Matrix

Dispositif d'affichage à cristal liquide à matrice active

(84) Designated Contracting States:
**DE FR GB**

(30) Priority: **14.02.1994 JP 1709894**

(43) Date of publication of application:
**16.08.1995 Bulletin 1995/33**

(73) Proprietor: **Hitachi, Ltd.**
**Chiyoda-ku, Tokyo 101 (JP)**

(72) Inventors:
- **Ohe, Masahito**
  **Hitachi-shi, Ibaraki 316 (JP)**
- **Kondo, Katsumi**
  **Hitachinaka-shi, Ibaraki 312 (JP)**
- **Ota, Masuyuki**
  **Hitachinaka-shi, Ibaraki 312 (JP)**
- **Ohara, Shuichi**
  **Hitachi-shi, Ibaraki 319-14 (JP)**

(74) Representative: **Beetz & Partner Patentanwälte**
**Steinsdorfstrasse 10**
**80538 München (DE)**

(56) References cited:
**EP-A- 0 588 568**
**WO-A-91/10936**
**US-A- 4 345 249**

EP 0 667 555 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

BACKGROUND OF THE INVENTION

FIELD OF THE INVENTION

The present invention relates to a liquid crystal display apparatus, and more particulary to an active matrix liquid crystal display apparatus.

DESCRIPTION OF THE PRIOR ART

In the conventional Liquid Crystal Display Apparatus, as for the electrodes for driving the liquid crystal layer, the electrodes are formed on the surface of two substrates, and transparent electrodes are used, each electrode facing to each other. This is because what is used is a display method represented by Twisted Nematic display method in which the liquid crystal layer is driven by applying an electric field in the vertical direction to the surface of the substrate. On the other hand, as for the display method in which an electric field is applied in the direction almost parallel to the surface of the substrate, a display method using comb-type electrodes is disclosed in the Japanese Patent No. 63-21907 (1988) and USP 4345249. In this case, the electrodes are not necessarily selected to be transparent, but non-transparent and metallic electrodes with higher electric conductivity are used.

PCT document WO 91/10936 describes a liquid crystal display using the horizontal field method which exhibits a reduced dependence of the contrast of the liquid crystal display on the viewing angle of the user.

However, in the prior art above, as for the display method in which the electric field is applied in the direction to the surface of the electrode, (which is designated "In-plane switching method"), specifically used in the active matrix drive mode, or as for the horizontal electric field method with low voltage drive, the enabling material property of the liquid crystal layer and the device structure are not described in detail.

In the horizontal electric field method, it is required to make the electrode gap wider in order to attain a higher cross-section for the open port, which causes the problem that the necessary drive voltage becomes higher. In addition, in order to allow the mouse as a pointing device to be enabled in the liquid crystal display apparatus, it is required to establish the response time between 150 ms and 200 ms, and for enabling motion picture resolution, the response time is required to be 50 ms. However, the response time of the liquid crystal to the electric field change is generically slow, it often makes such a problem that the response time of the liquid crystal is slow in various kinds of display methods using Nematic Liquid Crystal. This is not exceptional in the horizontal electric field method. In addition, due to the electrode structure specific to the horizontal electrid field method, the electric field tend not to be fully applied to the liquid crystal, which results in the slower response of the liquid crystal. Thus, some means is required in order to reduce the drive voltage and to enable the use of a mouse and motion picture resolution.

The object of the present invention is to provide an active matrix type liquid crystal display apparatus which has a high-speed response to allow the mouse as a pointing device or enable motion picture resolution in the horizontal electric field method.

This object is solved in accordance with the features of claim 1. Dependent claims are directed on preferred embodiments of the invention.

In the present invention, the following means are used for solving the above mentioned problems and attaining the above objective as recited in appended claim 1.

The present invention includes a pair of substrates, at least one of which is transparent; a layer of liquid crystal composite material arranged between the substrates; electrodes on the substrates for applying an electric field substantially parallel to the substrates; an orientation control layer for controlling the orientation of the molecules of the liquid crystal; polarization means; and drive means; and the relationship between the dielectric constants of the liquid crystal composite material ($(\varepsilon_{LC})//$: dielectric constant measured along the longitudinal axis of the molecules, $(\varepsilon_{LC})\perp$ : dielectric constant measured along the tranverse axis of the molecules), and the dielectric constant of the orientation control layer, ($\varepsilon_{AF}$), is one of the equations (1)

$$(\varepsilon_{LC})// > 2\varepsilon_{AF}, \text{ or } (\varepsilon_{LC})\perp > 2\varepsilon_{AF}. \qquad (1)$$

Further, the relationship between the viscosity of the liquid crystal composite material, $\eta$, and its elasticity constant of torsion, $K_2$, is the equation (2).

$$\eta/K_2 < 4.5 \times 10^{10}\ [s \cdot m^{-2}]. \quad (2)$$

Furthermore, the liquid crystal composite material according to the present invention is made to include liquid crystal chemical compound represented by the general chemical formula (I), in which fluoro group or cyano group, or both of them coexist as an end group.

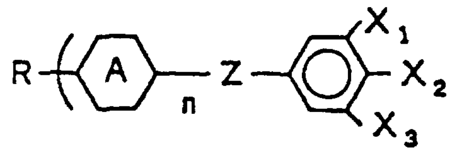

(I)

In the chemical formula (I), $X_1$, $X_2$ and $X_3$ are fluoro group, cyano group, or hydrogen atom; R is alkyl group or alkoxyl group having from 1 to 10 carbon atoms which may be substituted; Ring R is cyclohexane ring, benzene ring, dioxane ring, pyrimidine ring, or [2, 2, 2]-bicyclooctane ring; Z is a single bond, an ester bond, an ether bond, methylene, or ethylene; and n is 1 or 2.

Preferably, the liquid crystal composite material may be made so as to include liquid crystal chemical compound represented by the general chemical formula (I), in which fluoro group or cyano group, or both of them coexist as an end group.

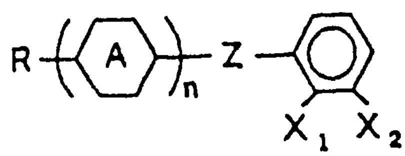

(II)

In the chemical formula (II), $X_1$ and $X_2$ are fluoro group, cyano group, or hydrogen atom; R is alkyl group or alkoxyl group having from 1 to 10 carbon atoms which may be substituted; Ring R is cyclohexane ring, benzene ring, dioxane ring, pyrimidine ring, or [2, 2, 2]-bicyclooctane ring; Z is a single bond, an ester bond, an ether bond, methylene, or ethylene; and n is 1 or 2.

Preferably, the retardation of the liquid crystal composite material layer, $d \cdot \Delta n$, may be greater than or equal to 0.21 μm, and less than or equal to 0.36 μm.

The gap between the substrates of the liquid crystal apparatus is less than or equal to 6 mm, and a liquid crystal material is selected such that the response time is less than or equal to 100 ms, and greater than or equal to 1 ms.

FIGS. 1(a) to 1(d) show the operation of the liquid crystal in the liquid crystal display apparatus of a horizontal electric field type.

FIG. 2 is a plane view of the unit pixel in the liquid crystal display apparatus of a horizontal electric field type.

FIG. 3 is a cross-section view of the unit pixel in the liquid crystal display apparatus of a horizontal electric field type.

FIG. 4 shows the angle $\phi_P$ defined by the polarization transmission axis, the angle $\phi_{LC}$ defined by the liquid crystal molecule longitudinal axis (optical axis) at the interface neighborhood, and the angle $\phi_R$ defined between the condensive axis in the phase shifter plate and the electric field direction in the embodiments 1 to 5 and the comparison examples 1 and 2.

FIG. 5 is the definition of the response time.

FIG. 6 is a diagrammatic picture showing the diffraction of the electric field at the interface on the dielectric layer.

FIG. 7 is a graph showing the relationship between the response speed and the ratio of the viscosity of the liquid crystal to the elasticity constant of the liquid crystal is shown in the embodiments and the comparison examples of the present invention.

DETAILED DESCRIPTION OF THE PREFERRED EMBODIMENTS

In FIG. 4, the angle $\phi_p$ is defined by the polarization transmission axis, the angle $\phi_{LC}$ by the liquid crystal

molecule longitudinal axis (optical axis) at the interface neighborhood, and the angle $\phi_R$ by the condensive axis in the phase shifter plate inserted between the pair of polarizers. The angle $\phi_P$ and $\phi_{LC}$ are expressed selectively in terms of $\phi_{P1}$, $\phi_{P2}$, $\phi_{LC1}$ and $\phi_{LC2}$ as there are a pair of polarizers and a pair of liquid crystal interfaces.

FIGS. 1(a) and 1(b) show side cross-section views showing the operation of the liquid crystal in the liquid crystal panel, and FIGS. 1(c) and 1(d) show front views of them in the present invention. In FIGS. 1(a) to 1(d), active devices are not shown. In addition, though a plurality of pixels are formed with striped electrodes in the present invention, a partial view of a single pixel is shown in FIGS. 1(a) to 1(d). The side cross-section view when voltage is not applied is shown in FIG. 1(a) and the front view is shown in FIG. 1(c). The linear electrodes 3 and 4 is formed inside a pair of transparent substrates 1,and a pair of orientation films 6 are coated on the substrates 1 so that they face to each other. Liquid crystal composite material is inserted between the films. The liquid crystal molecule 5 shaped in line is oriented so that the angle $\phi_{LC}$ of the longitudinal axis of the molecule between the longitudinal direction of the Y electrode shaped in stripe may be maintained to be an adequate angle such as $45° \leq |\phi_{LC}| < 90°$. For the explanation below, the orientation direction of the liquid crystal molecule on the upper and lower interfaces is assumed to be parallel to each other, that is, $\phi_{LC}1 = \phi_{LC}2$. The dielectric anisotropy of the liquid crystal composite material is assumed to be positive. Next, when the electric field 9 is applied, as shown in FIGS. 1 (b) and (d), the axis of the liquid crystal molecule 7 is made oriented in the direction of the electric field. By placing the polarizer 2 with a designated angle 8, it is enabled that the optical transmission can be modulated by applying and changing the electric field. Thus, the display operation for defining contrast is allowed without transparent electrodes. Though the dielectric anisotropy of the liquid crystal composite material is assumed to be positive, it may be selected to be negative. In case of negative dielectric anisotropy, as for the initial orientation of the liquid crystal molecule, the angle $\phi_{LC}$ is maintained to be an adequate angle to the vertical direction to the longitudinal axis of the striped electrode such as $0° < |\phi_{LC}| \leq 45°$.

The response time in the horizontal electric field method can be derived by solving the torque balance equation in terms of elastic torque, electro-magnetic torque and viscous torque. The rising-up time and the falling-down time of the liquid crystal result in the following expression.

$$\tau_{rise} = \gamma 1/(\varepsilon_0 \Delta\varepsilon E^2 - \pi^2 K_2/d^2), \quad (3)$$

and

$$\tau_{fall} = \gamma^1 d^2/\pi^2 K_2 = \gamma 1/\varepsilon 0 \Delta\varepsilon E_c^{\ 2}, \quad (4),$$

where

$\tau_{rise}$ is the rising-up time,
$\tau_{fall}$ is the falling-down time,
$\gamma 1$ is viscosity coefficient,
$K_2$ is the elastic constant of torsion,
d is the cell gap,
$\Delta\varepsilon$ is the dielectric anisotropy,
$\varepsilon_0$ is the vacuum dielectric index,
E is the electric field intensity, and
$E_c$ is the threshold electric field intensity.

The above equation shows that the response time can be reduced by making smaller the cell gap d between the substrates facing to each other. As making the cell gap d smaller, the falling-down time decreases proportionally to the reciprocal of the square of the cell gap d. On the other hand, the second term of the dominant of the expression of the rising-up time is smaller than its first term, the rising -up time is not extended even by making the cell gap smaller.

Therefore, to make the cell gap between the substrates facing to each other 6 μm or less provides a prospective way to establish the response time less than or equal to 100ms, preferably, less than or equal to 5μm. In the above definition, as shown in FIG. 5, the response time is defined to be the time period while the transmission ratio changes required for the 90% fraction of its switching operation between the minimum voltage and the maximum voltage.

As described in claim 1, by means that the relationship between the dielectric constant of the liquid crystal composite material layer, (($\varepsilon_{LC}$)//: dielectric constant measured in the longitudinal axis of the molecule, ($\varepsilon_{LC}$)⊥ : dielectric constant measured in the shorter axis of the molecule), and the dielectric constant of the orientation control layer, ($\varepsilon_{AF}$), is made to hold the equation ($\varepsilon_{LC}$)// > $2\varepsilon_{AF}$, or ($\varepsilon_{LC}$)⊥ > $2\varepsilon_{AF}$, and that the relationship between the viscosity of the liquid

crystal composite material layer, $\eta$, and the elasticity constant of torsion, $K_2$, holds the equation, $\eta/K_2 < 45$ [Gs/(m·m)], it will be appreciated that a liquid crystal display apparatus with high-speed response can be established. In the ordinary horizontal electric field method, as the thickness of the electrode is smaller than the thickness of the liquid crystal composite material layer, the electric field completely parallel to the interface between the liquid crystal and the orientation layer can not completely applied to the liquid crystal layer. This incomplete horizontal electric field makes worse the efficiency in switching the liquid crystal on the interface. As the refraction of the electric field between the two-layered dielectric material layer is so formed as shown in FIG. 6, by making the dielectric constant $\varepsilon_{LC}$ of the liquid crystal larger than the dielectric constant $\varepsilon_{AF}$ of the orientation layer, preferably making $\varepsilon_{LC}$ twice as large as $\varepsilon_{AF}$, what can be applied to the liquid crystal is a horizontal electric field which is more parallel to the interface between the liquid crystal and the orientation layer. Therefore, a necessary horizontal electric field can be supplied efficiently to the liquid crystal for switching the liquid crystal on the interface. In addition, with more intensive study in which the viscosity $\eta$ of the liquid crystal is modified to be smaller or the elasticity constant $K_2$ of the twist is modified to be larger, the high-speed response which enables the use of a mouse or motion picture resolution can be attained when the ratio between the viscosity and the elasticity constant is 45 [Gs/(mm)].

Furthermore, it is proved that the liquid crystal shown in claim 2 is adapted to the conditions given in claim 1, and that the high-speed response which enables the use of a mouse or motion picture resolution can be attained. As the trifluoro-type liquid crystal having a molecular structure with fluoro group at the molecular end has a larger dielectric anisotropy $\Delta\in$, about 7, while smaller viscosity $\eta$ between 20cp and 30 cp, it is also possible to make the drive voltage smaller and the response time shorter by adding this type of liquid crystal to another liquid crystal. More instantly, trans-4-heptyl-(3, 4, 5-trifluorophenyl) cyclohexane; 1, 2, 6-trifluoro-4-[trans--4-(trans-4-propylcyclohexyl) cyclohexyl] benzene; Trans-4-propyl-(3, 4, 5-trifluorobiphenyl-4'-yl) cyclohexane; 2-(trans-4-propylcyclohexyl)-1-[trans-4-(3, 4, 5-trifluorophenyl) cyclohexyl] ethane; 3, 4, 5-trifluorophenyl-trans-4-benzylcyclohexylcarboxylate; Trans-4-heptyl-(3, 4-difluorophenyl) cyclohexane; 1, 2-difluoro-4-[trans-4-(trans-4-propylcyclohexyl) cyclohexyl] benzene; Trans-4-propyl-(3, 4, difluorobiphenyl-4'-yl) cyclohexane; 2-(trans-4-propylecyclohexyl)-1-[trans-4-(3, 4-difluorophenyl) cyclohexyl] ethane; 3, 4-difluorophenyl-trans-4-benzylcyclohexylcarboxylate; Trans-4-heptyl-(4-cyanophenyl) cyclohexane; 1, 2-dicyano-4-[trans-4-(trans-4-propylcyclohexyl) cyclohexyl] benzene; Trans-4-propyl-(3, 4-dicyanobiphenyl-4'-yl) cyclohexane; 2-(trans-4-propylcyclohexyl)-1-[trans-4-(3, 4-dicyanophenyl) cyclohexyl] ethane; 3, 4-dicyanophenyl-trans-4-benzylcyclohexylcarboxylate; 4-cyano-3-fluorophenyl-trans-4-propylcyclohexylcarboxylate. The present invention does not exclude compounds other than above. The liquid crystal compound having fluoro group at the ortho position in its cyano end group, represented by 4-cyano-3-fluorophenyl-trans-4-propylcyclohexylcarboxylate, is known to be material which does not tend to form dimer to cancel the dipole momentum. As such liquid crystal compound has larger dielectric constant and lower viscosity, it is effective to apply this kind of compound to the high-speed driving operation in the horizontal electric field method.

Furthermore, it is proved that the liquid crystal shown in claim 3 above is adapted to the conditions given by claim 1, and that the high-speed response which enables the use of a mouse or motion picture resolution can be attained. More instantly, trans-4-heptyl-(2, 3-difluorophenyl) cyclohexane; 2, 3-difluoro-4-[trans-4-(trans-4-propylcyclohexyl) cyclohexyl] benzene; Trans-4-propyl(2, 3-difluorobiphenyl-4'-yl) cyclohexane; 2-(trans-4-propylcyclohexyl)-1-[trans-4-(2, 3-difluorophenyl) cyclohexyl] ethane; 2, 3-difluorophenyl-trans-4-benzylcyclohexylcarboxylate; Trans-4-heptyl-(2-cyano-3-fluorophenyl) cyclohexane; 2-cyano-3-fluoro-4-[trans-4-(trans-4-propylcyclohexyl) cyclohexyl] benzene; Trans-4-propyl-(2-cyano-3-fluorobiphenyl-4'-yl) cyclohexane; 2-(trans-4-propylcyclohexyl)-1-[trans-4-(2-cyano-3-fluorophenyl) cyclohexyl] ethane; 2-cyano-3-fluorophenyl-trans-4-benzylcyclohexylcarboxylate. The present invention does not exclude compounds other than above.

In the above described means for driving with high-speed response, from the view point that the overall design of the display device should satisfy many aspects of characteristics and performances other than response time, such as brightness and contrast ratio, the retardation of the liquid crystal, $d\cdot\Delta n$, is determined, for example, as follows. In case of displaying in multiple diffraction mode as described before, the intensity of the transmitted light is defined by the following equation when arranging a couple of polarizers in crossed nicols.

$$I/I_o=\sin^2(2\alpha)\cdot\sin^2(\pi d\cdot\Delta n/\lambda), \qquad (5)$$

where

- $\alpha$ is the angle defined by the effective light axis of the liquid crystal layer and the polarization transmission axis;
- d is the cell gap;
- $\Delta n$ is the anisotropic property of the refractive index of the liquid crystal; and
- $\lambda$ is the wavelength of light.

In order to obtain the normally-close characteristic in which the display pixel takes a dark state when low-voltage applied, and the display pixel takes a bright state when high-voltage applied, as for the layout arrangement of the polarizers, the transmission axis of one polarizer may be taken to be almost parallel to the orientation direction of the liquid crystal molecule (rubbing axis), which means $\phi_{P1} = \phi_{LC1} = \phi_{LC2}$, and the transmission axis of the other polarizer may be taken to be perprendicular to the rubbing axis, which means $\phi_{P1} = \phi_{P2} = 90°$. When the electric field is not applied, as $\alpha$ in the equation (5) is 0, the light transmission index $I/I_0$ is also 0. In contrast, when the electric field is applied, $\alpha$ increases as the light intensity increases, and thus, the light transmission index $I/I_0$ takes its maximum value at $\alpha$=45°. In this case, assuming that the wavelength of light is 0.555 µm, the effective $d_{eff} \cdot \Delta n$ may be taken to be 0.28 µm, half of the wavelength of light, in order to maximize the transmission index with no color tone. As the liquid crystal molecules are fixed in the neighboring area of the interface in the actual cell, $d_{eff}$ is less than the cell gap d. Therefore, in order to attain the higher transmission index and the whiteness of the display emission light for the display pixel in the normally-close characteristics taking a bright state in the multiple refraction mode, $d \cdot \Delta n$ is allowed to be 0. 30 µm a little larger than half of the wavelength of light. In the actual use, as there is variable margin, $d \cdot \Delta n$ is allowed to be between 0.21 µm and 0.36 µm.

From the view point described above, by making $\Delta n$, the anisotropic property of the refractive index of the liquid crystal used, relatively large, and setting the retardation, $d \cdot \Delta n$, between 0.21 and 0.36 µm as described in means 5 above for higher contrast, the gap between the substrates facing to each other is necessarily selected to be small, which may lead to the prospective means for high-speed response.

As described in formula (3) and (4), it is advantageous for high-speed response to select the liquid crystal with lower viscosity. It is also possible to make the response faster by making the absolute value of the dielectric anisotropy of the liquid crystal, $|\Delta\varepsilon|$, as larger as possible. This implies that the interactive energy between the electric field and the liquid crystal becomes larger.

With embodiments below, the present invention will be described more in detail.

[Embodiment 1]

FIG. 2 shows a plane view of the unit pixel in the first embodiment of the present invention. FIG. 3 shows a cross section view of FIG. 2. The scanning electrode 10 composed of A1 is formed on the polished glass substrate 1, and the surface of the scanning electrode is coated with the anodized film 19 of alumina. The gate nitridation layer 16 (gate SiN) and the amorphous Si layer (a-Si) 17 are formed so as to cover the scanning electrode 10. The n-type a-Si layer 18, the source electrode 3 and the picture signal electrode 11 are formed onto the a-Si layer 17. In addition, the common electrode 4 is attached onto the layer identical to the source electrode 3 and the picture signal electrode 11. As for the structure of the source electrode 3 and the picture signal electrode 11, as shown in FIG. 2, the extension of the these electrodes is parallel to the common electrode 4 formed in stripe and intersects the scanning signal electrode 10 at right angle, and thus, thin film transistors (FIGS. 2 and 3) and the metallic electrodes are formed on one of the substrates. With these transistors and electrodes, the electric field is developed between the source electrode 3 and the common electrode 4 on one of the substrates so that the extention direction 9 of the developed electric field may be almost parallel to the interface of the substrate. The individual electrodes on the substrate are composed of aluminum, but the selection of metal is not limited to aluminum but allowed to be chromium or copper and so on. The number of pixels is selected to be 40 (X3) X30 (that is, n = 120, and m = 30). The horizontal pixel pitch, which is the distance between common electrodes, is 80 µm, and the vertical pixel pitch, which is the distance between gate electrodes, is 240 µm. The width of the common electrode is 12 µm, which is made to be smaller than the distance between the common electrodes, 68 µm, which leads to the larger open port rate.

The color filter 20 formed in stripe for RGB colors is formed on the substrate facing the substrate on which the thin film transistors are formed. On the color filter 20, the transparent resin 13 for flattening the surface of the color filter is multiply coated. For the material for the transparent resin, epoxy resin is used. The drive LSI is connected to the panel.

The material used for the liquid crystal compound has such a property that the anisotropic property of the refractive index, $\Delta n$, is 0.072, the dielectric anisotropy, $\Delta\varepsilon$, is 3.7 ($\varepsilon$//: 7.4, $\varepsilon\perp$ : 3.7), the viscosity, $\eta$, is 20cp(20°C), and the elasticity constant of torsion, $K_2$, is 8.4 x 10-8 dyn. Therefore, $\eta/K_2$ is 23.9[Gs/(m·m)]. The material used for the orientation layer is PIQ with its relative dielectric constant, $\varepsilon_{AF}$, being 2.8. Therefore, the relation, $(\varepsilon_{LC})// > 2\varepsilon_{AF}$, holds. The individual rubbing direction of a couple of substrates is parallel to each other, and has an angle 105° ($\phi_{LC1} = \phi_{LC2}$ = 105°) against the direction in which the applied electric field is extended. See FIG. 4. The gap d between the substrates is formed and controlled with polymer beads dispersed between the substrates so as to be 3.8 µm with liquid crystal filled.

The panel is sandwiched with a couple of polarizers (G1220DU, made by Nitto Electric Co.), and the polarization transmission axis of one polarizer is set to be parallel to the rubbing direction, which means $\phi_{P1}$ = 105°, and the polarization transmission axis of the other polarizer is set to intersect perpendicularly with the former polarization transmission axis, which means $\phi_{P2}$ = 15°. With this geometrical configuration, the normally-close characteristic of the

display pixel can be established.

According to the measurement of the response time of the liquid crystal obtained in the above configuration, the rising-up time is 30 ms, and the falling-down time is 35 ms.

In the above definition, as shown in FIG. 5, the response time is defined to be the time period while the transmission ratio changes required for the 90% fraction of its switching operation between the minimum voltage and the maximum voltage.

[Embodiment 2]

The structure in the embodiment 2 is identical to that of the embodiment 1 excluding the following features.

The material used for the liquid crystal compound is MLC-2011 (made by MELC, Co.) the major component of which is 2, 3-difluorobenzene derivative. In this material, $\eta/K^2$ is 27.8 [Gs/(m·m)]. The dielectric anisotropy of the liquid crystal of this embodiment, $\Delta\varepsilon$, is -3.3 (E//: 3.1 $\varepsilon\perp$ : 7.1). Therefore, the relation, $(\varepsilon_{LC})\perp > 2\varepsilon_{AF}$, holds. The gap d between the substrates is set to be 4.7 μm, and the retardation, d·Δn, is determined to be about 0.35 μm.

The individual rubbing direction of a couple of substrates is parallel to each other, and has an angle 15° ($\phi_{LC1} = \phi_{LC2} = 15°$) against the direction in which the applied electric field is extended. See FIG. 4. The panel is sandwiched with a couple of polarizers (G1220DU, made by Nitto Electric Co.), and the polarization transmission axis of one polarizer is set to be parallel to the rubbing direction, which means $\phi_{P1} = 15°$, and the polarization transmission axis of the other polarizer is set to intersect perpendicularly with the former polarization transmission axis, which means $\phi_{P2} = -75°$. With this geometrical configuration, the normally-close characteristic of the display pixel can be established.

According to the measurement of the response time of the liquid crystal obtained in the above configuration, the rising-up time is 38 ms, and the falling-down time is 44 ms.

[Embodiment 3]

The structure in the embodiment 3 is identical to that of the embodiment 1 excluding the following features.

The material used for the liquid crystal compound is MLC-2009 (made by MELC, Co.) the major component of which is 2, 3-difluorobenzene derivative. In this material, $\eta/K_2$ is 44.0 [Gs/(m·m)]. The dielectric anisotropy of the liquid crystal of this embodiment, $\Delta\in$, is -3.4 ($\varepsilon$//: 3.9 $\varepsilon\perp$ : 7.3). Therefore, the relation, $(\varepsilon_{LC})\perp > 2\varepsilon_{AF}$, holds. The gap d between the substrates is set to be 2.0 μm, and the retardation, d·Δn, is determined to be about 0.30 μm.

The individual rubbing direction of a couple of substrates is parallel to each other, and has an angle 15° ($\phi_{LC1} = \phi_{LC2} = 15°$) against the direction in which the applied electric field is extended. See FIG. 4. The panel is sandwiched with a couple of polarizers (G1220DU, made by Nitto Electric Co.), and the polarization transmission axis of one polarizer is set to be parallel to the rubbing direction, which means $\phi_{P1} = 15°$, and the polarization transmission axis of the other polarizer is set to intersect perpendicularly with the former polarization transmission axis, which means $\phi_{P2} = -75°$. With this geometrical configuration, the normally-close characteristic of the display pixel can be established.

According to the measurement of the response time of the liquid crystal obtained in the above configuration, the rising-up time is 40 ms, and the falling-down time is 20 ms.

[Embodiment 4]

The structure in the embodiment 4 is identical to that of the embodiment 1 excluding the following features.

The material used for the liquid crystal compound is LIXON-5023 (made by Chisso, Co.) the major component of which is 2, 3-difluorobenzene derivative. In this material, $\eta/K_2$ is 42.0 [Gs/(m·m)]. The dielectric anisotropy of the liquid crystal of this embodiment, $\Delta\in$, is 4.5 ($\varepsilon$//: 8.2 $\varepsilon\perp$ : 3.7). Therefore, the relation, $(\varepsilon_{LC})// > 2\varepsilon_{AF}$, holds. The gap d between the substrates is set to be 3.5 μm, and the retardation, d·Δn, is determined to be about 0.28 μm.

According to the measurement of the response time of the liquid crystal obtained in the above configuration, the rising-up time is 25 ms, and the falling-down time is 30 ms.

[Embodiment 5]

The structure in the embodiment 5 is identical to that of the embodiment 1 excluding the following features.

The material used for the liquid crystal compound is a material disclosed in Japanese Laid-Open Patent No. 2-233626 (1990), (made by Chisso, Co.) the major component of which is 3, 4, 5-trifluorobenzene derivative. In this material, η/K2 is 23.6 [Gs/(m·m)]. The dielectric anisotropy of the liquid crystal of this embodiment, $\Delta\varepsilon$, is 7.3 ($\varepsilon$//: 11.0 $\varepsilon\perp$ : 3.7). Therefore, the relation, $(\varepsilon_{LC})// > 2\varepsilon_{AF}$, holds. The gap d between the substrates is set to be 4.7 μm, and the retardation, d·Δn, is determined to be about 0.34 μm.

According to the measurement of the response time of the liquid crystal obtained in the above configuration,

the rising-up time is 28 ms, and the falling-down time is 53 ms.

[Comparison Example 1]

The structure in the comparison example 1 is identical to that of the embodiment 1 excluding the following features.

The material used for the liquid crystal compound is ZLI-2806. In this material, η/K2 is 46.2 [Gs/(m·m)]. The dielectric anisotropy of the liquid crystal of this comparison example, Δε, is -4.8 (ε//: 3.3 ε⊥ : 8.1). Therefore, the relation, $(\varepsilon_{LC})\perp > 2\varepsilon_{AF}$, holds. The gap d between the substrates is set to be 6.2 μm, and the retardation, d·Δn, is determined to be about 0.27 μm.

The individual rubbing direction of a couple of substrates is parallel to each other, and has an angle 15° ($\phi_{LC1} = \phi_{LC2}$ = 15°) against the direction in which the applied electric field is extended. See FIG. 4. The panel is sandwiched with a couple of polarizers (G1220DU, made by Nitto Electric Co.), and the polarization transmission axis of one polarizer is set to be parallel to the rubbing direction, which means $\phi_{P1}$ = 15°, and the polarization transmission axis of the other polarizer is set to intersect perpendicularly with the former polarization transmission axis, which means $\phi_{P2}$ = -75°. With this geometrical configuration, the normally-close characteristic of the display pixel can be established.

According to the measurement of the response time of the liquid crystal obtained in the above configuration, the rising-up time is 150 ms, and the falling-down time is 180 ms.

[Comparison Example 2]

The structure in the comparison example 2 is identical to that of the embodiment 1 excluding the following features.

The material used for the liquid crystal compound has such a property that the anisotropic property of the refractive index, Δn, is 0.0743, the viscosity, η, is 20cp(20°C), and the elasticity constant of the twist, $K_2$, is 4.17 mdyn. Therefore, $\eta/K_2$ is 48.0 [Gs/(m·m)]. The dielectric anisotropy of the liquid crystal of this comparison example, Δ∈, is -1.5 (ε//: 3.2 ε⊥ : 4.7). Therefore, the relation, either of $(\varepsilon_{LC})// > 2\varepsilon_{AF}$ or $(\varepsilon_{LC})\perp > 2\varepsilon_{AF}$ does not hold. The gap d between the substrates is set to be 3.8 μm, and the retardation, d·Δn, is determined to be about 0.28 μm.

According to the measurement of the response time of the liquid crystal obtained in the above configuration, the rising-up time is 100 ms, and the falling-down time is 120 ms.

In FIG. 7, the relationship between the response speed and the ratio of the viscosity of the liquid crystal to the elasticity constant of the liquid crystal is shown in the embodiments and the comparison examples of the present invention.

According to the present invention, by means of making the gap between the substrates facing to each other less than or equal to 6 μm, a high-speed horizontal electric field method can be attained. In addition, by adjusting the material property of the liquid crystal layer and the orientation layer so as to satisfy the formula (1) and (2), the response time of the liquid crystal in the horizontal electric field method can be reduced. As a result, an active matrix type liquid crystal display apparatus using horizontal electric field method which allows mouse-compatible or enables motion picture resolution can be obtained.

## Claims

**1.** A liquid crystal display apparatus, comprising

a pair of substrates (1), at least one of which is transparent;
a layer of liquid crystal composite material between said substrates (1);
an orientation control layer (6) for controlling the orientation of liquid crystal molecules (5) in said layer;
electrodes (3,4) on said substrates (1) for applying an electric field mainly parallel to said substrates (1);
polarization means (2); and
drive means; **characterized in that**

the relationship between the dielectric constants of said liquid crystal composite material, $(\varepsilon_{LC})//$ being the dielectric constant measured along the longitudinal axis of the molecules and $(\varepsilon_{LC})\perp$ the dielectric constant measured along a transverse axis of the molecules (5), and the dielectric constant of the orientation control layer (6), $\varepsilon_{AF}$, is one of the equations (1),

$$(\varepsilon_{LC})// > 2\varepsilon_{AF} \text{ or } (\varepsilon_{LC})\perp > 2\varepsilon_{AF}, \qquad (1)$$

and the relationship between the viscosity of said liquid crystal composite material, $\eta$, and its elasticity constant of torsion, $K_2$, is the equation (2),

$$\eta/K_2 < 4.5 \times 10^{10}\ [s \cdot m^{-2}]. \quad (2)$$

**2.** A liquid crystal display apparatus according to Claim 1, **characterized in that** said liquid crystal composite material is made to include liquid crystal chemical compound represented by a general chemical formula (I), in which fluoro group or cyano group, or both of them coexist as an end group:

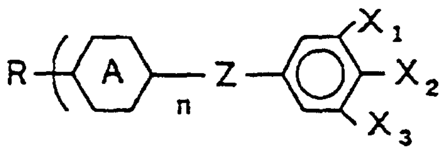

(I)

wherein $X_1$, $X_2$ and $X_3$ are fluoro group, cyano group, or hydrogen atom; R is alkyl group or alkoxyl group having from 1 to 10 carbon atoms which may be substituted, Ring A is cyclohexane ring, benzene ring, dioxane ring, pyrimidine ring, or [2, 2, 2]-bicyclooctane ring; Z is a single bond, an ester bond, an ether bond, methylene, or ethylene; and n is 1 or 2.

**3.** A liquid crystal display apparatus according to Claim 1, wherein said liquid crystal composite material is made to include liquid crystal chemical compound represented by a general chemical formula (II), in which fluoro group or cyano group, or both of them coexist as an end group:

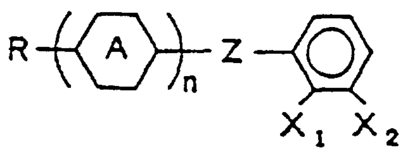

(II)

wherein $X_1$ and $X_2$ are fluoro group, cyano group, or hydrogen atom; R is alkyl group or alkoxyl group having from 1 to 10 carbon atoms which may be substituted; Ring R is cyclohexane ring, benzene ring, dioxane ring, pyrimidine ring, or [2, 2, 2]-bicyclooctane ring; Z is a single bond, an ester bond, an ether bond, methylene, or ethylene; and n is 1 or 2.

**4.** A liquid crystal display apparatus according to Claims 1 to 3, **characterized in that** the retardation of said layer of liquid crystal composite material the, $d \cdot \Delta n$, is greater than or equal to 0.21 μm, and less than or equal to 0.36 μm.

**Patentansprüche**

**1.** Flüssigkristallanzeigevorrichtung mit
zwei Substraten (1), von denen zumindest eines transparent ist; einer Schicht von Flüssigkristall-Kompositmaterial zwischen den Substraten (1);
einer Ausrichtungssteuerungsschicht (6) zum Steuern der Ausrichtung von Flüssigkristallmolekülen (5) in der Schicht; Elektroden (3, 4) auf den Substraten (1) zum Anlegen eines elektrischen Feldes hauptsächlich parallel zu den Substraten (1); einer Polarisationseinrichtung (2); und
einer Ansteuerungseinrichtung;
**dadurch gekennzeichnet, daß**
die Beziehung zwischen den dielektrischen Konstanten des Flüssigkristall-Kompositmaterials $(\varepsilon_{LC})//$, die Dielektrizitätskonstante in Richtung der Längsachse der Moleküle, und $(\varepsilon_{LC})\perp$, die Dielektrizitätskonstante längs einer Querachse der Moleküle (5) und der Dielektrizitätskonstanten der Ausrichtungssteuerungsschicht (6) $\varepsilon_{AF}$ einer der Gleichungen (1) genügen

$$(\varepsilon_{LC})// > 2\varepsilon AF \text{ oder } (\varepsilon_{LC})\perp > 2\varepsilon_{AF}, \qquad (1)$$

und wobei die Beziehung zwischen der Viskosität des Flüssigkristall-Kompositmaterials η und seiner Elastizitätskonstante bezüglich Torsion $K_2$ der Gleichung (2) genügt

$$\eta/K_2 < 4,5 \cdot 10^{10}\ [s \cdot m^{-2}]. \qquad (2)$$

2. Flüssigkristallanzeigevorrichtung nach Anspruch 1, **dadurch gekennzeichnet, daß** das Flüssigkristall-Kompositmaterial einen chemischen Flüssigkristallbestandteil aufweist, der durch eine allgemeine chemische Formel (I) dargestellt ist, bei der Fluorgruppen oder Cyanogruppen oder beide zusammen als Endgruppen vorliegen:

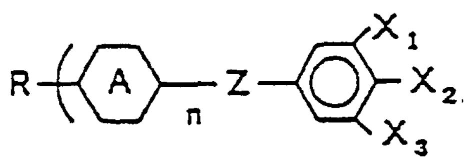

(I),

wobei $X_1$, $X_2$ und $X_3$ Fluorgruppen, Cyanogruppen oder Wasserstoffatome sind; R eine Alkylgruppe oder eine Alkoxygruppe mit 1 bis 10 Kohlenstoffatomen ist, die substituiert sein können;
Ring A ein Cyclohexanring ist, ein Benzolring, ein Dioxanring, ein Pyrimidinring oder ein [2,2,2]-Bicyclooctanring ist;
Z eine einfache Bindung, eine Esterbindung, eine Etherbindung, Methylen oder Ethylen ist; und
n 1 oder 2 ist.

3. Flüssigkristallanzeigevorrichtung nach Anspruch 1, bei der das Flüssigkristall-Kompositmaterial einen chemischen Flüssigkristallbestandteil aufweist, der durch eine allgemeine chemische Formel (II) dargestellt ist, bei der Fluorgruppen oder Cyanogruppen oder beide zusammen als Endgruppen vorliegen:

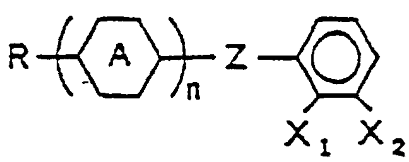

(II),

wobei $X_1$ und $X_2$ Fluorgruppen, Cyanogruppen oder Wasserstoffatome sind; R eine Alkylgruppe oder eine Alkoxylgruppe mit 1 bis 10 Kohlenstoffatomen ist, die substituiert sein können;
Ring R ein Cyclohexanring ist, ein Benzenring, ein Dioxanring, ein Pyrimidinring oder ein [2,2,2]-Bicyclooctanring ist;
Z eine einfache Bindung, eine Esterbindung, eine Etherbindung, Methylen oder Ethylen ist; und
n 1 oder 2 ist.

4. Flüssigkristallanzeigevorrichtung nach Anspruch 1 oder 3, **dadurch gekennzeichnet, daß** die Verzögerung der Schicht des Flüssigkristall-Kompositmaterials, $d \cdot \Delta n$, $\geq 0,21$ µm und $\leq 0,36$ µm ist.

## Revendications

1. Dispositif d'affichage à cristaux liquides, comportant
   une paire de substrats (1), dont au moins un est transparent,
   une couche de matériau composite à cristaux liquides située entre lesdits substrats (1),
   une couche de commande d'orientation (6) pour commander l'orientation des molécules de cristaux liquides

(5) dans ladite couche,

des électrodes (3, 4) situées sur lesdits substrats (1) pour appliquer un champ électrique, principalement parallèle auxdits substrats (1),

des moyens de polarisation (2), et

des moyens d'excitation,

**caractérisé en ce que** la relation entre les constantes diélectriques dudit matériau composite à cristaux liquides, $(\varepsilon_{LC})//$ étant la constante diélectrique mesurée le long de l'axe longitudinal des molécules et $(\varepsilon_{LC})\perp$ étant la constante diélectrique mesurée le long d'un axe transversal des molécules (5), et la constante diélectrique de la couche de commande d'orientation $\varepsilon_{AF}$ est l'une des équations (1),

$$(\varepsilon_{LC})// > 2\varepsilon_{AF} \text{ ou } (\varepsilon_{LC})\perp > 2\varepsilon_{AF}, \quad (1)$$

et la relation entre la viscosité dudit matériau composite à cristaux liquides, $\eta$, et sa constante élastique de torsion, $K_2$, est l'équation (2),

$$\eta/K_2 < 4{,}5 \times 10^{10}\ [s \cdot m^{-2}]. \quad (2)$$

2. Dispositif d'affichage à cristaux liquides selon la revendication 1, **caractérisé en ce que** ledit matériau composite à cristaux liquides est constitué pour inclure des composés chimiques à cristaux liquides représentés par une formule chimique générale (I), dans laquelle un groupe fluoro ou un groupe cyano, ou les deux, coexistent en tant que groupe d'extrémité :

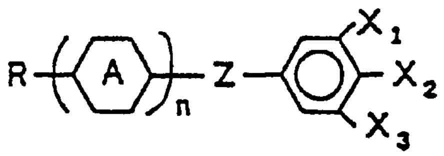

(I)

dans laquelle $X_1$, $X_2$ et $X_3$ sont un groupe fluoro, un groupe cyano, ou un atome d'hydrogène ; R est un groupe alkyle ou un groupe alkoxyle ayant de 1 à 10 atomes de carbone qui peuvent être substitués ; le cycle A est un cycle cyclohexane, benzène, dioxane, pyrimidine, ou [2,2,2]-bicyclooctane, Z est une simple liaison, une liaison ester, une liaison éther, méthylène ou éthylène ; et n est 1 ou 2.

3. Dispositif d'affichage à cristaux liquides selon la revendication 1, dans lequel ledit matériau composite à cristaux liquides est constitué pour inclure un composé chimique à cristaux liquides représenté par une formule chimique générale (II), dans laquelle un groupe fluoro ou un groupe cyano, ou les deux, coexistent en tant que groupe d'extrémité :

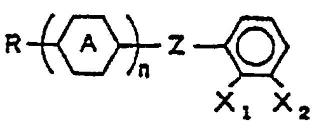

(II)

dans laquelle $X_1$ et $X_2$ sont un groupe fluoro, un groupe cyano, ou un atome d'hydrogène ; R est un groupe alkyle ou un groupe alkoxyle ayant de 1 à 10 atomes de carbone qui peuvent être substitués ; le cycle A est un cycle cyclohexane, benzène, dioxane, pyrimidine, ou [2,2,2]-bicyclooctane, Z est une simple liaison, une liaison ester, une liaison éther, méthylène ou éthylène ; et n est 1 ou 2.

4. Dispositif d'affichage à cristaux liquides selon l'une quelconque des revendications 1 à 3, **caractérisé en ce que** le retard de ladite couche de matériau composite à cristaux liquides $d \cdot \Delta n$, est supérieur ou égal à 0,21 μm et inférieur ou égal à 0,36 μm.

FIG. 1(a)

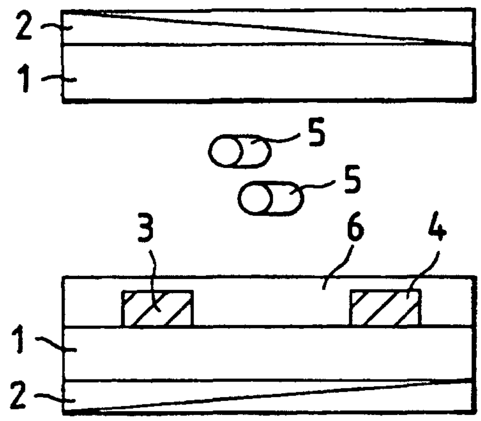


FIG. 1(b)

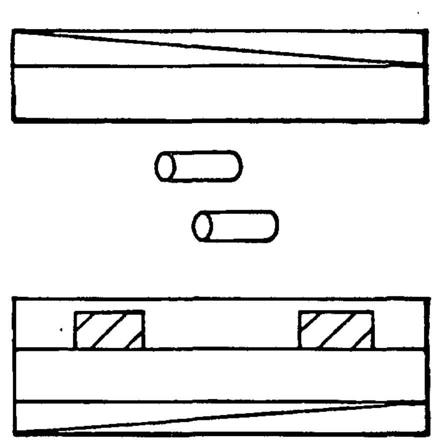

FIG. 1(c)

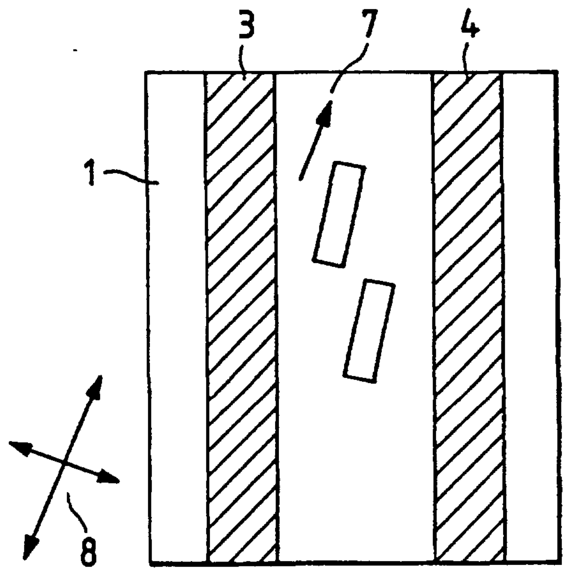


FIG. 1(d)

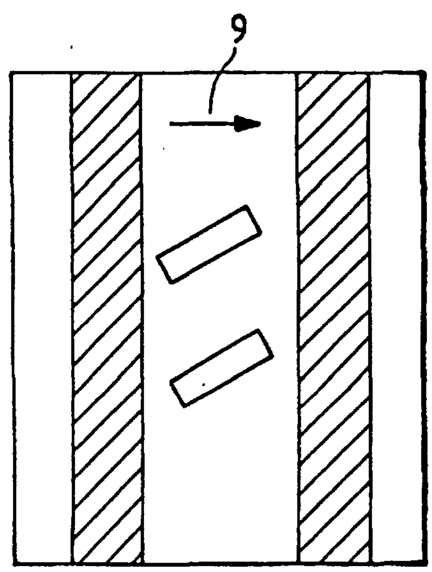

FIG. 2

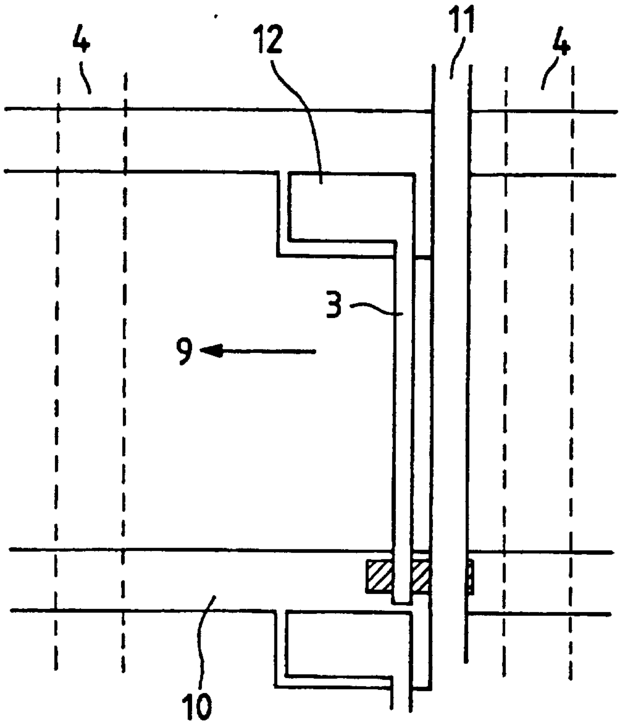


FIG. 3

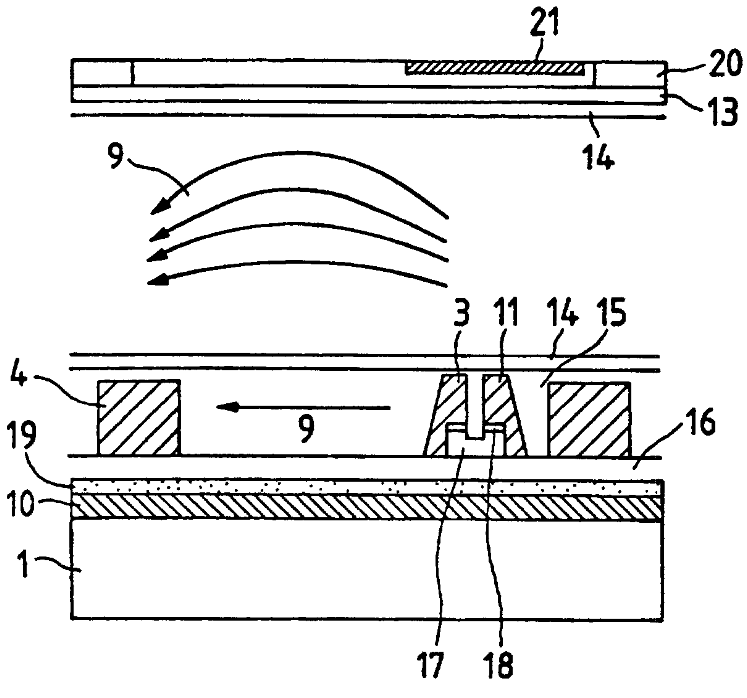

FIG. 4

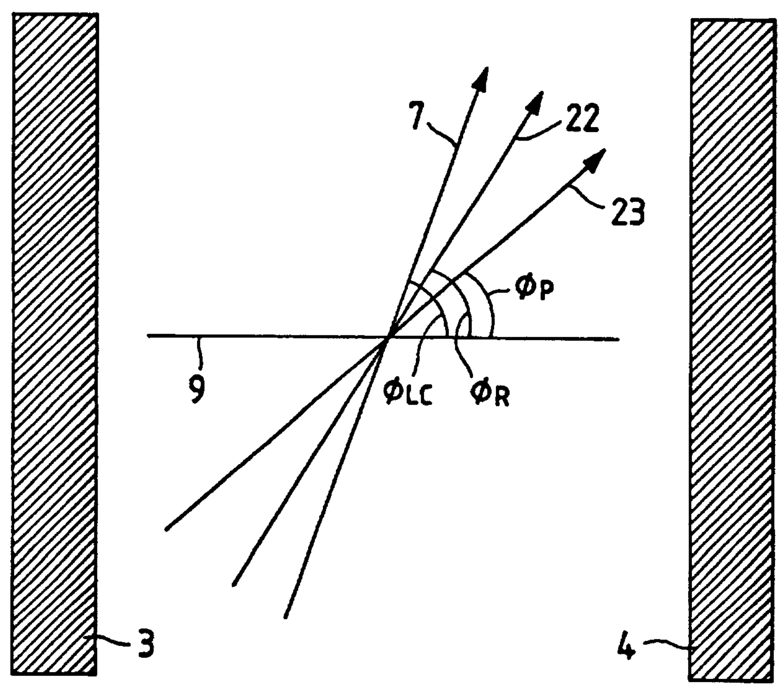
7
22
23
ΦP
9
ΦLC
ΦR
3
4

FIG. 5

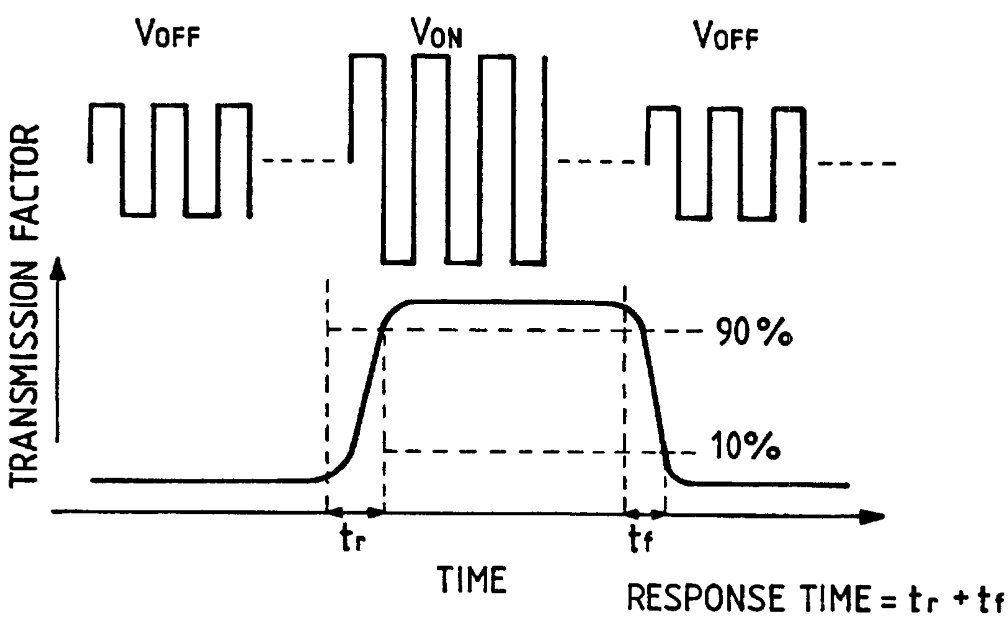
VOFF
VON
VOFF
TRANSMISSION FACTOR
90%
10%
tr
tf
TIME
RESPONSE TIME = tr + tf

FIG. 6

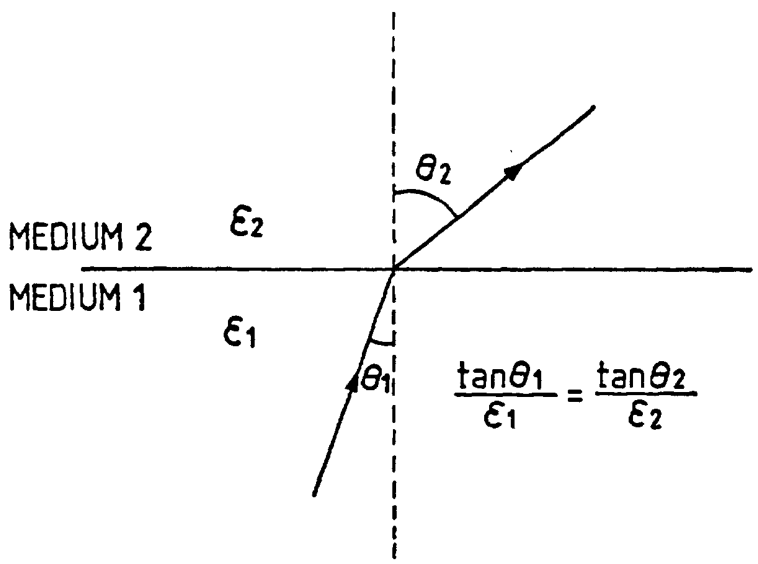
θ2
MEDIUM 2
ε2
MEDIUM 1
ε1
θ1
tanθ1 / ε1 = tanθ2 / ε2

FIG. 7

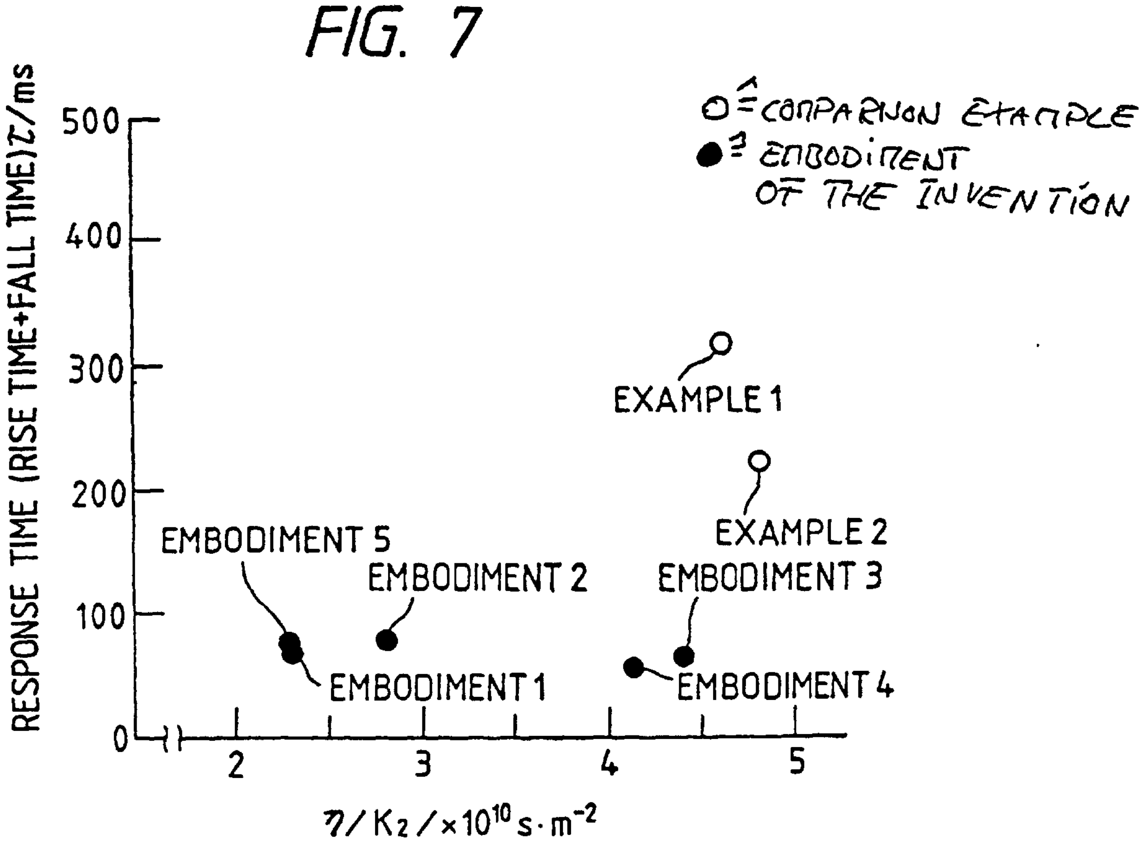
RESPONSE TIME (RISE TIME+FALL TIME)τ/ms
500
400
300
200
100
0
2
3
4
5
η/K2/×10^10 s·m^-2
○ ≙ COMPARISON EXAMPLE
● ≙ EMBODIMENT OF THE INVENTION
EXAMPLE 1
EXAMPLE 2
EMBODIMENT 5
EMBODIMENT 2
EMBODIMENT 3
EMBODIMENT 1
EMBODIMENT 4